# EUROPÄISCHE PATENTSCHRIFT

(11) **EP 1 742 387 B1**
(45) Veröffentlichungstag und Bekanntmachung des Hinweises auf die Patenterteilung: **08.09.2010**
(21) Anmeldenummer: 06013882.3
(22) Anmeldetag: 05.07.2006
(51) Int. Cl.: H04B 10/00

(54) **Elektrische Schalteinrichtung**
Electrical switching device
Système de commutation électrique

(30) Priorität: 05.07.2005 DE 102005031268
(43) Veröffentlichungstag der Anmeldung: 10.01.2007
(73) Patentinhaber: Eaton Industries GmbH, 53115 Bonn (DE)
(72) Erfinder: Freyermuth, Thomas, 53505 Kalenbom (DE)
(74) Vertreter: Leadbetter, Benedict

(56) Entgegenhaltungen:
- WO-A-96/27211
- DE-A1- 19 908 574
- US-A1- 2002 054 410

## Beschreibung

Die Erfindung betrifft eine elektrische Schalteinrichtung umfassend mindestens eine Schnittstelle zur Umsetzung von Ein- und Ausgangssteuersignalen eines ersten Spannungsniveaus auf Ein- und Ausgangssteuersignale eines zweiten Spannungsniveaus. Die Signale können sowohl der Potentialverbindung als auch der Datenübermittlung dienen.

Industrielle Schalter- und Steuersysteme, heute meistens als speicherprogrammierbare Steuerung ausgeführt, erfordern häufig die Umsetzung von Signalen eines Spannungsniveaus und einer Spannungsart in ein anderes Spannungsniveau und/oder in eine andere Spannungsart. Hinzukommt, dass Steuersysteme Mehrfachfunktionen ausführen, bei denen auf der Eingangsseite und auf der Ausgangsseite ebenfalls mehrere unterschiedliche Spannungsniveaus und Spannungsarten nebeneinander auftreten. Beispielsweise haben speicherprogrammierbare Steuerungen oder auch Steuerrelais mehrere Ein- und Ausgänge, die meistens nur für einen bestimmten Spannungsbereich (24 V oder 230 V) vorgesehen sind. Probleme gibt es daher bei verschiedenen Spannungen, die auch noch ein unterschiedliches Bezugspotential haben können, da Taster, Sensoren, Relais oder Aktoren entsprechend ihrer Aufgabe spannungsmäßig versorgt werden müssen.

Zum Zwecke solcher Umsetzung finden Optokoppler-Bauelemente Einsatz in vielen Produkten, weil hierbei auch der Vorteil der galvanischen Trennung zwischen Ein- und Ausgangssignalen nutzbar ist.

Aus der DE 198 17 441 A1 ist beispielsweise bekannt, in einem Schnittstellenadapter einer speicherprogrammierbaren Steuerung Optokoppler vorzusehen, die zwischen einem ersten und einem zweiten Gerät eingesetzt sind, wobei die Geräte mit unterschiedlichen Spannungen arbeiten.

Weiterhin gehört zum Stand der Technik eine galvanisch trennende Koppelstelle für Energie- und/oder Signalübertragung (DE 3019646 A1). Hierfür werden in elektromedizinischen Geräten Geräteeinschübe eingesetzt, die eine optische Ankopplung aufweisen.

Die WO 96/27211 A offenbart eine elektrische Schalteinrichtung umfassend mindestens eine Schnittstelle zur Umsetzung von Ein- und Ausgangssteuersignalen eines ersten Spannungsniveaus auf Ein- und Ausgangssteuersignale eines zweiten Spannungsniveaus, wobei die Schnittstelle zwischen den Spannungsniveaus als Wandler zur potentialgetrennten, opto-elektronischen Umsetzung der Steuersignale ausgebildet ist.

Die US 2002/054410 A1 offenbart einen aus mechanisch koppelbare Modulen bestehenden Wandler, wobei die Module über Rastmittel miteinander durch parallel zu den Gehäuserandseiten verlaufenden Schubbewegung miteinander gekoppelt werden.

Es ist die Aufgabe der Erfindung, eine elektrische Schalteinrichtung mit mindestens einer opto-elektronischen Schnittstelle anzugeben, wobei die opto-elektronische Schnittstelle modular aufgebaut ist.

Die Lösung der Aufgabe findet sich im Hauptanspruch. Weiterführende Ausbildungen sind in den Unteransprüchen formuliert.

Der Kern der Erfindung besteht darin, dass der Wandler aus mindestens zwei, mechanisch trenn- und koppelbaren Modulen besteht, wobei das erste Modul (Sendemodul) mit einem Lichtsender ausgestattet ist, der über eine Gehäuserandseite des ersten Moduls übersteht, und das zweite Modul (Empfängermodul) mit einem Lichtempfänger ausgestattet ist, der bezüglich einer Gehäuserandseite des zweiten Moduls in der Tiefe des Gehäuses des Empfängermoduls liegt. Im Zustand der mechanischen Kopplung bilden die zueinander zugewandten Gehäuserandseiten Berührungsflächen; die beiden Module tragen mechanische Kupplungsmittel, die an den Berührungsflächen angeordnet sind.

Hierbei wird das Sendemodul als elektrischer Eingang für eine elektrische Schalteinrichtung, insbesondere für eine speicherprogrammierbare Steuerung benutzt. Auf der Ausgangsseite einer Schalteinrichtung kann ebenfalls mindestens ein erfindungsgemäßer Wandler eingesetzt werden, so dass die Ausgangssignale für diverse Schaltfunktionen optimal angepasst sind. Der opto-elektronische Wandler kann nicht nur für Schaltzwecke verwendet werden, sondern auch für die Informationsübertragung zwischen verschiedenen Schnittstellen. Der Ein- und Ausgang eines Wandlers ist einem Eingangs-, bzw. Ausgangskanal einer Schalteinrichtung zugeordnet und verdrahtet. Für verschiedene Kanäle einer solchen Steuerung wird jeweils ein Wandler eingesetzt.

Der Schaltkreis eines Empfängermoduls ist vorzugsweise elektronisch aufgebaut, so dass AC- oder DC-Ströme geschaltet werden können und die Polarität keine Rolle spielt. Die maximal schaltbare Spannung und der maximale Schalt-Strom werden durch die Gehäuseisolation und die Ausgangstransistoren bestimmt. Bei einfachem Aufbau können Betriebsspannungen bis 264 V abgedeckt werden. Insbesondere können die Module Schaltkreise aufnehmen, die beispielsweise die Betriebsspannung auf die Versorgungsspannung von LEDs (einige Volt) heruntersetzen.

Weitere vorteilhafte Ausgestaltungen sind im folgenden kurz angesprochen.

Jedes Modul trägt an den den Berührungsflächen gegenüber liegenden Gehäuserandseiten ebenfalls Kupplungsmittel, die zu den an den Berührungsflächen angeordneten Kupplungsmitteln komplementär sind. Die Kupplungsmittel umfassen mindestens ein Hakenteil und mindestens ein zum Hakenteil komplementäres Einrastteil. Die Wirkungsrichtung der mechanischen Kopplung ist senkrecht zu den Berührungsflächen. Die Koppelmittel schnappen bei Bewegung in dieser Richtung ein; zum Lösen der Koppelmittel kann ein Hilfswerkzeug verwendet werden.

Die Dimensionierung der Kupplungsstücke kann auch für die unmittelbare Befestigung auf einer Tragschiene angepasst sein. Eine solche Dimensionierung betrifft im wesentlichen die Abmessung der Tragschiene und den Abstand der Hakenteile untereinander.

Die Gehäuse jedes Moduls sollen identische Außenformen haben. Damit lassen sich Herstellkosten optimieren. Gemeinsam mit der einheitlichen Ausbildung der Kupplungsmittel an allen Modulen und der möglichst einheitlichen Gehäuseform wird der Vorteil der Modularität des erfindungsgemäßen Gegenstandes besonders deutlich.

Ein Modul kann aus zwei identischen Gehäusehälften aufgebaut sein, wobei die Gehäusehälften ihre Trennebene in der Ebene der größten Erstreckung eines Moduls haben.

Vorzugsweise wird vorgeschlagen, den Wandler mit einem Adapter-Modul zur mechanischen und optischen Kopplung zwischen Sendemodul und Empfängermodul auszustatten, so dass eine Überbrückung einer größeren Distanz zwischen Lichtsender und Lichtempfänger möglich wird. Die optische Strecke wird mittels Lichtleitfaser überbrückt. Vorzugsweise kann die Lichtleitfaser eine Kunststofflichtleitfaser sein. Hiermit lassen sich mehrere Meter Distanz überbrücken. Das Adapter-Modul besteht somit aus zwei Modul-Bausteinen, die an ihren zueinander gerichteten Seiten je eine Aufnahme für die Lichtleitfaser haben und möglicherweise dort zur Verbesserung der Lichtein- und -auskopplung noch ein Linsensystem aufweisen. Auf den jeweils voneinander abgewandten Seiten haben die Modul-Bausteine die entsprechenden, komplementären Einrast- und Hakenteile, wie sie an den zuvor beschriebenen Modulen ebenfalls vorhanden sind. Der Vorteil des Einsatzes eines Adapter-Moduls ist, dass keine Beeinflussung durch elektromagnetische Störfelder möglich ist und dass nur eine (optische) Leitung verlegt werden muss, anstelle einer Zweidrahtleitung bei elektrischer Überbrückung.

Mit dem Einsatz eines Adapter-Moduls ist es noch besser möglich, Bereiche mit sehr hoher Spannung oder großer Störumgebung von Bereichen niedriger Spannung sicher zu trennen. Mit Hilfe eines Adapter-Moduls lassen sich auch andere Aufgaben erfüllen, beispielsweise die Abstandsvergrößerung zwischen Steuer- oder Bedienerteil einer Schalteinrichtung.

Alle erwähnten Module sollen denselben Gehäuseaufbau haben. Weiterhin sollen an allen Modulen dieselben mechanischen Kupplungsmittel und die elektrischen Kontaktierungsmittel vorhanden sein. Dem Sendemodul kann ein Vorschaltmodul zugeordnet sein. Das Vorschaltmodul soll zur Spannungsversorgung des Lichtsenders dienen, wenn die vorhandene Versorgungsspannung größer ist, als die Betriebsspannung des Lichtsenders. Dazu kann das Vorschaltmodul mit einem Schaltkreis oder Bauelement ausgestattet sein, mit dem die Versorgungsspannung (beispielsweise 500 V) auf den Wert der Betriebsspannung (beispielsweise 264 V) reduzierbar ist. Beispielsweise kann der Schaltkreis als kapazitiver Spannungsteiler ausgestaltet sein, im einfachsten Fall kann es sich auch um einen ohmschen Vorwiderstand handeln.

Jedem Modul, insbesondere einem Sendemodul kann ein mechanischer Adapter zugeordnet sein, an dem mechanische Kupplungsmittel für das Modul vorhanden sind und der Adapter mit Mitteln zum Aufschnappen auf eine Tragschiene ausgestattet ist. Der Adapter kann für diejenigen Fälle eingesetzt werden, in denen ein Modul nicht passend auf eine Tragschiene aufsetzbar ist.

Die Erfindung wird in mehreren Figuren dargestellt, wobei diese im Einzelnen zeigen:
Fig. 1 mehrere Module der Schalteinrichtung,
Fig. 2 ein Adapter-Modul,

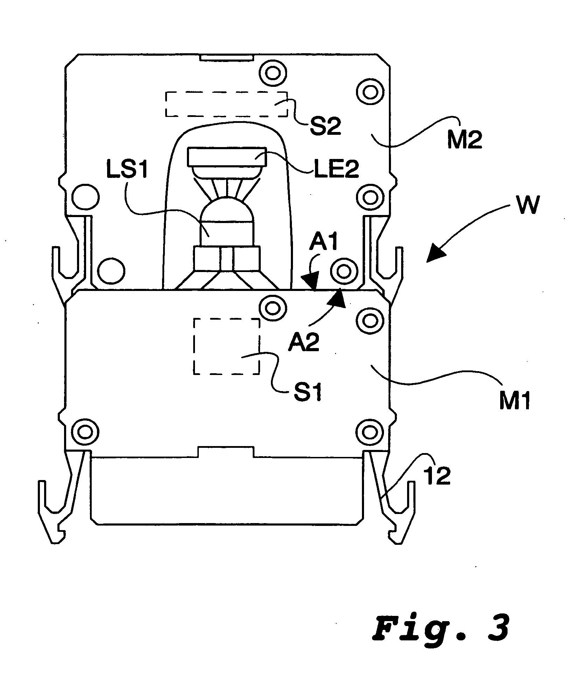

Fig. 3 einen Wandler im gekoppelten Zustand,
Fig. 4 eine Verschaltung mehrerer Wandler mit einer Steuerung.

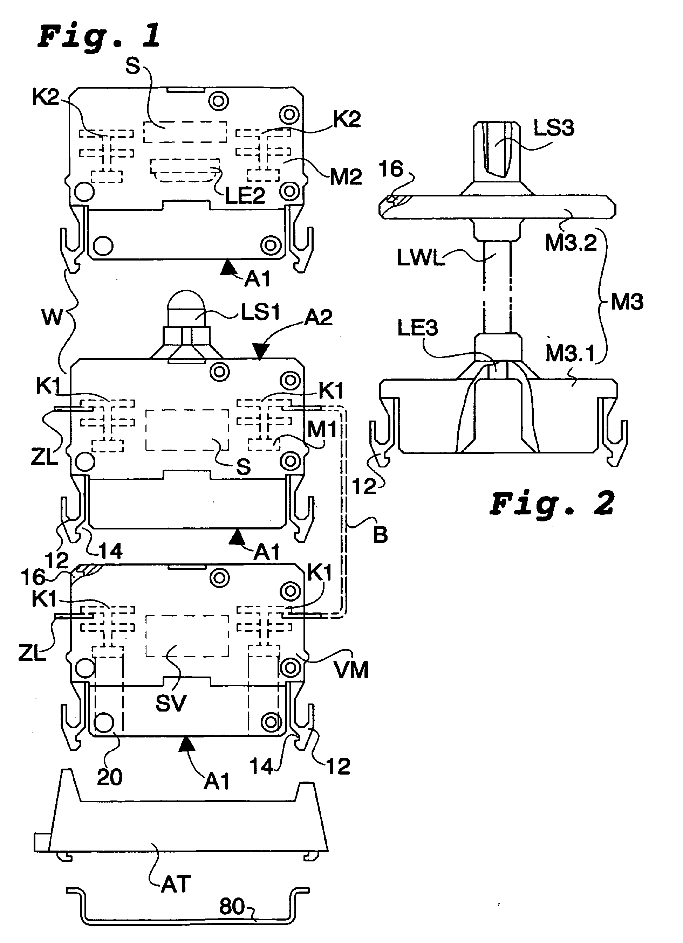

Die Fig. 1 zeigt in auseinander gerückter Darstellung ein Ausführungsbeispiel umfassend eine Tragschiene 80, einen Adapter AT, ein Vorschaltmodul VM und einen Wandler W bestehend aus den Modulen M1 und M2. Die Module haben vorzugsweise Reihenklemmenbauform, also einen flachen Gehäuseaufbau.

In der Figur sind Kontaktstücke oder Eingangsklemmen K1 für Zuleitungen ZL erkennbar, ebenso sind Ausgangklemmen K2 angedeutet, die der Verdrahtung dienen. Weiterhin sind angedeutet, dass die Module elektronische Schaltkreise S umfassen, die der opto-elektrischen Umsetzung der Signale dienen. Die elektrische Kontaktierung erfolgt von der Seite; die Klemmen sind über Öffnungen 20 für Drehwerkzeug zugänglich. Die Öffnungen sind auf der Gehäuseseite vorhanden, an denen die Hakenteile 14 angeordnet sind. Zur elektrischen Verbindung zwischen zwei Modulen können Kabelbrücken B eingesetzt werden, wie sie beispielhaft in der Fig. 1 angedeutet sind.

Die Tragschiene kann vornehmlich eine Standard-Hutschiene (nach DIN) sein, andere Schienensysteme sind jedoch nicht ausgeschlossen. Die mechanische Kopplung der Module VM, M1, M2 untereinander geschieht über Einrastteile 16 und Hakenteile 14, wobei die Hakenteile 14 an federnden Schnapphaken 12 angeordnet sind. Die Hakenteile 14 sind an einer Kante des Gehäuses angeordnet und überragen eine erste Gehäuserandseite A1 eines Moduls. Die den Hakenteilen zugeordneten Einrastteile 16 sind an der der ersten Gehäuserandseite gegenüberliegenden Gehäuserandseite A2 eines jeden Moduls vorhanden. Die Hakenteile 14 stehen über die Gehäuserandseite A1 vor; wobei die Einrastteile 16 in der Tiefe des Gehäuses verdeckt angeordnet sind. Die geometrische Zuordnung der Einrastteile 16 und Hakenteile 14 ist so gewählt, dass nach der mechanischen Kopplung sich die zueinander zugewandten Gehäuserandseiten der Module berühren.

Die Hakenteile 14 weisen nach innen zueinander. Die Einrastteile 16 sind entsprechend nach außen voneinander weg gerichtet. Der Abstand der Hakenteile 14 sollte der Breite einer Tragschiene entsprechend dimensioniert sein, so dass auch das unmittelbare Aufsetzen eines Moduls ohne Adapter auf eine Tragschiene möglich ist. Der Gehäuseaufbau, die Hakenteile 14 und Einrastteile 16 und die elektrische Kontaktierung sind bei allen erwähnten Modulen identisch vorhanden.

In Fig. 1 ist ein Adapter AT gezeigt, der dann zu verwenden ist, wenn ein Unterschied in der Breite der Tragschiene und in dem Abstand der Hakenteile vorliegt. Der Adapter dient somit dem Ausgleich der Dimensionen. Eine andere Funktion, die ein Adapter ausfüllen kann, liegt darin, dass er zur Aufnahme mehrerer Module M1 nebeneinander in der Tiefe ausgebildet ist. In typischen Anwendungen können zwei, drei oder vier Module nebeneinander verwendet werden. Eine Befestigung einzelner oder mehrerer, erfindungsgemäßer Wandler, direkt oder mittels Adapter auf einer Standard DIN-Hutschiene ist durch einfaches Aufschnappen machbar, dabei kann jeder Wandler zur individuellen Spannungsanpassung modulartig anders zusammengestellt sein. Nebeneinander liegende Wandler bleiben untereinander potentialfrei.

Das erste Modul M1 des Wandlers trägt an der zweiten Gehäuserandseite A2 einen Lichtsender LS1, der beispielsweise als LED ausgebildet sein kann. Die LED kann auf einem Stecksockel sitzen. Der Lichtsender LS1 steht gegenüber der Gehäuserandseite A2 relativ weit vor. Das zweite Modul M2 des Wandlers hat in seinem Innern einen Lichtempfänger LE2, der ein Photoelement oder ein Phototransistor sein kann. Der Lichtempfänger LE2 liegt in der Tiefe des Gehäuses des zweiten Moduls M2. Nach der mechanischen Kopplung der Module stehen sich die opto-elektronischen Elemente LS1 und LE2 tief innerhalb des geschlossenen Gehäuses des Moduls M2 gegenüber. Damit ist der Vorteil verbunden, dass Fremdlichteinflüsse vermieden werden und ein Staubschutz vorhanden ist.

Die Gehäuse G beider Module M1, M2 sind vorzugsweise aus zwei identischen Gehäusehälften aufgebaut, wobei das Gehäuse eines Moduls in der Ebene der größten Erstreckung getrennt ist. Die symmetrische Gehäusehälfte bildet eine mittige Trennebene. Durch den identischen Aufbau lässt sich die Herstellung und die Montage stark vereinfachen. Die Art des Aufbaus ist in ähnlicher Weise schon zuvor in der DE 199 08 574 A1 dargestellt und beschrieben worden. Insbesondere die Ausbildung des Hakenteils 14 und die Einbaulage des Leuchtelements LS1 ist in der genannten Schrift (dort Fig. 2) gut erkennbar.

Die Fig. 2 zeigt ein Adapter-Modul M3, welches aus zwei Modul-Bausteinen M3.1, M3.2 besteht. Der erste Baustein ist ein optischer Empfänger; der zweite ist ein optischer Sender. Die optische Strecke wird mittels Lichtleitfaser LWL überbrückt, beispielsweise eine Kunststofffaser. Zur Lichtein- und/oder -auskopplung kann in den Bausteinen jeweils noch ein Linsensystem eingesetzt sein. An den Modul-Bausteinen sind Einrast- (16) und Hakenteile (12) vorhanden zur Kopplung mit den Modulen M1 und M2.

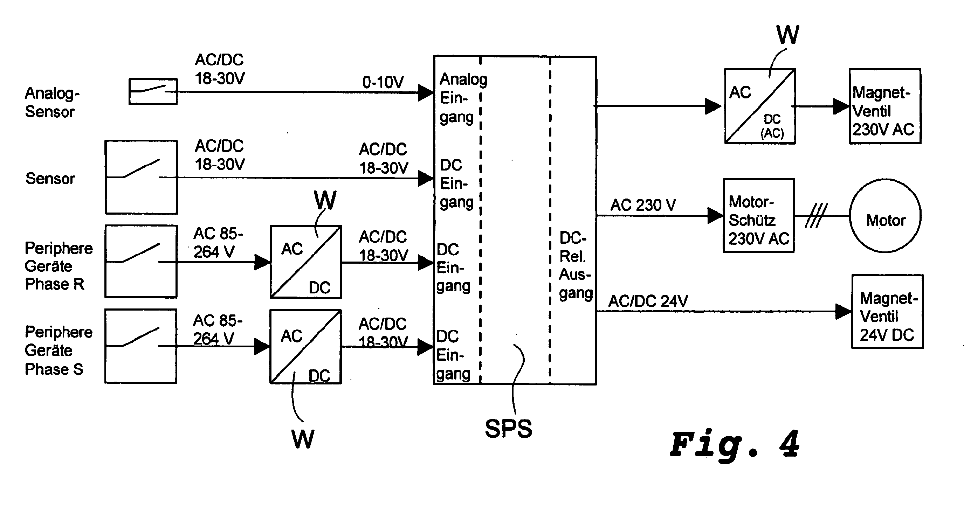

Die Fig. 4 zeigt eine Verschaltung mehrerer Wandler mit einer speicherprogrammierbaren Steuerung SPS. Die SPS hat in dieser Darstellung 4 Eingänge, von denen 3 Eingänge Gleichstromeingänge sind. Die 3 Gleichstromeingänge haben das gleiche Spannungsniveau (DC). Um diesen Eingängen auch Signale eines anderen Spannungsniveaus und einer anderen Spannungsart (AC) zuzuführen, werden diesen Eingängen je ein Wandler W vorgeschaltet.

### Bezugszeichen

- 10: mechanische Kupplungsmittel
- 12: federnder Schnapphaken
- 14: Hakenteil
- 16: Einrastteil
- 20: Zugangsöffnung für Klemmschraube
- 80: Tragschiene

- A1 A2: Gehäuserandseite, Berührungsflächen
- AT: Adapter für Aufsetzen auf Tragschiene
- B: Kabelbrücke
- G: Gehäuse
- GH: Gehäusehälften
- K1: Eingangs-Klemmen (Kontaktstücke) für Schaltkreis
- K2: Ausgangs-Klemmen zu einem Schaltgerät
- LE2: Lichtempfänger
- LS1: Lichtsender LED
- LWL: Lichtleitfaser
- M1: Sendemodul
- M2: Empfängermodul
- M3: Adaptermodul
- M3.1 M3.2: Modul-Bausteine
- S: Schaltkreis
- SPS: speicherprogrammierbare Steuerung
- SV: Schaltkreis Vorschaltmodul
- VM: Vorschaltmodul
- W: Wandler
- ZL: Zuleitung

## Patentansprüche

1. Elektrische Schalteinrichtung umfassend mindestens eine Schnittstelle zur Umsetzung von Ein- und Ausgangssteuersignalen eines ersten Spannungsniveaus auf Ein- und Ausgangssteuersignale eines zweiten Spannungsniveaus, wobei die Schnittstelle zwischen den Spannungsniveaus als Wandler (W) zur potential-getrennten, opto-elektronischen Umsetzung der Steuersignale ausgebildet ist, **dadurch gekennzeichnet,**
• **dass** der Wandler (W) aus mechanisch koppelbaren Modulen (M1, M2) besteht und
• ein erstes Modul als Sendemodul (M1) mit einem Lichtsender (LS1) ausgestattet ist, der über eine Gehäuserandseite (A2) des Sendemoduls (M1) übersteht, und
• ein zweites Modul als Empfängermodul (M2) mit einem Lichtempfänger (LE2) ausgestattet ist, der bezüglich einer Gehäuserandseite (A1) des Empfängermoduls (M2) in der Tiefe des Gehäuses des Empfängermoduls (M2) liegt, und
• **dass** im Zustand der mechanischen Kopplung die zueinander zugewandten Gehäuserandseiten (A1, A2) Berührungsflächen bilden, und
• **dass** die Module (M1, M2) mechanische Kupplungsmittel (12,14) tragen, von denen ein erstes Kupplungsmittel mindestens ein mit einem Hakenteil (14) versehener federnder Schnapphaken (12) und ein anderes Kupplungsteil mindestens ein zum Hakenteil (14) des Schnapphakens (12) komplementäres Einrastteil (16) ist, wobei die Schnapphaken (12) an senkrecht zu den Berührungsflächen (A1, A2) vorhandenen Gehäuserandseiten angeordnet sind, und die Schnapphaken (12) in ihrer Länge über die Berührungsfläche (A1, A2) hinaus vorstehen, und die Einrastteile (16) in der Tiefe des Gehäuses verdeckt angeordnet sind.

2. Schalteinrichtung nach Anspruch 1, **dadurch gekennzeichnet, dass** Sendemodul (M1) und Empfängermodul (M2) an den den Berührungsflächen (A1, A2) gegenüber liegenden Gehäuserandseiten (A1, A2) ebenfalls Kupplungsmittel (12,14) tragen, die zu den an den Berührungsflächen (A1, A2) angeordneten Kupplungsmitteln (12,14) komplementär sind.

3. Schalteinrichtung nach einem der vorhergehenden Ansprüche; **dadurch gekennzeichnet, dass** der Wandler (W) ein Adapter-Modul (M3) zur mechanischen und optischen Kopplung zwischen Sendemodul (M1) und Empfängermodul (M2) umfasst, wobei das Adapter-Modul (M3) aus zwei Modul-Bausteinen (M3.1, M3.2) besteht, an denen komplementäre Kupplungsmittel angeordnet sind, die mit den Kupplungsmitteln (12,14) des Sendemoduls (M1) und des Empfängermoduls (M2) zusammenwirken,
und der erste Modul-Baustein (M3.1) einen Lichtempfänger (LE3) und der zweite Modul-Baustein (M3.2) einen Lichtsender (LS3) umfasst und zwischen Lichtempfänger (LE3) und Lichtsender (LS3) eine Lichtleitfaser (LWL) vorhanden ist.

4. Schalteinrichtung nach einem der vorhergehenden Ansprüche, **dadurch gekennzeichnet, dass** die Schnapphaken (12) den Abmessungen einer Tragschiene (80) angepasst sind, so dass ein Modul (M1, M2) unmittelbar auf eine Tragschiene (80) aufsetzbar ist.

5. Schalteinrichtung nach einem der vorhergehenden Ansprüche, **dadurch gekennzeichnet, dass** die Gehäuse jedes Moduls (M1, M2) eine identische Außenform haben.

6. Schalteinrichtung nach einem der vorhergehenden Ansprüche, **dadurch gekennzeichnet, dass** ein Modul (M1, M2) aus zwei identischen Gehäusehälften aufgebaut ist, die ihre Trennebene in der Ebene der größten Erstreckung eines Moduls haben.

7. Schalteinrichtung nach einem der vorhergehenden Ansprüche, **dadurch gekennzeichnet, dass** dem Sendemodul (M1) ein Vorschaltmodul (VM) zugeordnet ist, das denselben Gehäuseaufbau wie ein Sendemodul (M1) hat, an dem dieselben mechanischen Kupplungsmittel (12,14) wie am Sendemodul (M1) vorhanden sind, und das Vorschaltmodul (VM) einen Schaltkreis umfasst, der eine anlegbare Versorgungsspannung auf die Betriebsspannung des Lichtsenders des Sendemoduls herabsetzt.

8. Schalteinrichtung nach einem der vorhergehenden Ansprüche, **dadurch gekennzeichnet, dass** dem Sendemodul (M1) ein Adapter (AT) zugeordnet ist, an dem mechanische Kupplungsmittel (12,14) für das Sendemodul (M1) vorhanden sind und der Adapter mit Mitteln zum Aufschnappen auf eine Tragschiene (80) ausgestattet ist.

## Claims

1. An electrical switching means comprising at least one interface for converting input and output control signals of a first voltage level into intput and output control signals of a second voltage level, the interface between the voltage levels being in the form of a converter (W) for the isolated, opto-electronic conversion of the control signals, **characterised**
**in that** the converter (W) consists of modules (M1 M2) which can be mechanically coupled, and
a first module as transmission module (M1) is equipped with an optical transmitter (LS1) which projects over one housing edge side (A2) of the transmission module (M1), and
a second module as receiver module (M2) is equipped with an optical receiver (LE2) which with respect to one housing edge side (A1) of the receiver module (M2) lies in the depth of the housing of the receiver module (M2), and
**in that** in the state of mechanical coupling the facing housing edge sides (A1, A2) form contact surfaces, and
**in that** the modules (M1, M2) bear mechanical coupling means (12, 14), of which a first coupling means is at least one resilient snap-action hook (12) provided with a hook part (14), and another coupling part is at least one engagement part (16) complementary to the hook part (14) of the snap-action hook (12), the snap-action hooks (12) being arranged on housing edge sides present at right-angles to the contact surfaces (A1, A2), and the snap-action hooks (12) projecting in their length beyond the contact surface (A1, A2), and the engagement parts (16) being arranged concealed in the depth of the housing.

2. A switching means according to Claim 1, **characterised in that** the transmission module (M1) and the receiver module (M2) on the housing edge sides (A1, A2) located opposite the contact surfaces (A1, A2) likewise bear coupling means (12, 14) which are complementary to the coupling means (12, 14) arranged on the contact surfaces (A1, A2).

3. A switching means according to one of the preceding claims, **characterised in that** the converter (W) comprises an adapter module (M3) for mechanical and optical coupling between the transmission module (M1) and receiver module (M2), the adapter module (M3) consisting of two module components (M3.1, M3.2), on which complementary coupling means are arranged which cooperate with the coupling means (12, 14) of the transmission module (M1) and the receiver module (M2),
and the first module component (M3.1) comprises an optical receiver (LE3) and the second module component (M3.2) an optical transmitter (LS3), and an optical fibre (LWL) is present between the optical receiver (LE3) and optical transmitter (LS3).

4. A switching means according to one of the preceding claims, **characterised in that** the snap-action hooks (12) are adapted to the dimensions of a mounting rail (80), so that a module (M1, M2) can be placed directly on a mounting rail (80).

5. A switching means according to one of the preceding claims, **characterised in that** the housings of each module (M1, M2) have an identical external form.

6. A switching means according to one of the preceding claims, **characterised in that** a module (M1 M2) is constructed from two identical housing halves which have their parting plane in the plane of the greatest extent of a module.

7. A switching means according to one of the preceding claims, **characterised in that** a line-side module (VM) is associated with the transmission module (M1), which line-side module has the same housing construction as a transmission module (M1), on which the same mechanical coupling means (12, 14) are present as on the transmission module (M1), and the line-side module (VM) comprises a switching circuit which reduces a supply voltage which can be applied down to the operating voltage of the optical transmitter of the transmission module.

8. A switching means according to one of the preceding claims, **characterised in that** an adapter (AT) is associated with the transmission module (M1), on which adapter mechanical coupling means (12, 14) for the transmission module (M1) are present, and the adapter is equipped with means for snapping on to a mounting rail (80).

## Revendications

1. Dispositif de commutation électrique comprenant au moins une interface pour la conversion de signaux de commande d'entrée et de sortie d'un premier niveau de tension en signaux de commande d'entrée et de sortie d'un second niveau de tension, l'interface entre les niveaux de tension étant exécutée en tant que convertisseur (W) pour la conversion opto-électronique isolée des signaux de commande, **caractérisé par le fait**
**que** le convertisseur (W) est formé de modules pouvant être accouplés mécaniquement (M1, M2) et
un premier module est équipé, en tant que module émetteur (M1), d'un émetteur de lumière (LS1) qui fait saillie sur un côté de bord de boîtier (A2) du module émetteur (M1) et
un second module est équipé, en tant que module récepteur (M2), d'un récepteur de lumière (LE2) qui, par rapport à un côté de bord de boîtier (A1) du module récepteur (M2), est situé en profondeur dans le boîtier du module récepteur (M2) et
**que** les côtés de bord de boîtier (A1, A2) se faisant face forment, dans l'état d'accouplement mécanique, des surfaces de contact et
**que** les modules (M1, M2) sont pourvus de moyens d'accouplement mécanique (12, 14) parmi lesquels un premier moyen d'accouplement est au moins un crochet à déclic élastique (12) pourvu d'une partie en crochet (14), et un autre élément d'accouplement est au moins une partie d'enclenchement (16) complémentaire de la partie en crochet (14) du crochet à déclic (12), les crochets à déclic (12) étant situés sur des côtés de bord de boîtier perpendiculaires aux surfaces de contact (A1, A2), et les crochets à déclic (12) ont une longueur qui dépasse la surface de contact (A1, A2), et les parties d'enclenchement (16) sont situées de manière à être dissimulées dans la profondeur du boîtier.

2. Dispositif de commutation selon la revendication 1, **caractérisé par le fait que** le module émetteur (M1) et le module récepteur (M2) sont également pourvus, sur les côtés de bord de boîtier (A1, A2) opposés aux surfaces de contact (A1, A2), de moyens d'accouplement (12, 14) qui sont complémentaires des moyens d'accouplement (12, 14) situés sur les surfaces de contact (A1, A2).

3. Dispositif de commutation selon l'une des revendications précédentes, **caractérisé par le fait que** le convertisseur (W) comprend un module adaptateur (M3) pour l'accouplement mécanique et optique entre le module émetteur (M1) et le module récepteur (M2), le module adaptateur (M3) étant formé de deux composants modulaires (M3.1, M3.2) qui sont pourvus de moyens d'accouplement complémentaires qui coopèrent avec les moyens d'accouplement (12, 14) du module émetteur (M1) et du module récepteur (M2),
et le premier composant modulaire (M3.1) comprend un récepteur de lumière (LE3) et le second composant modulaire (M3.2) comprend un émetteur de lumière (LS3) et une fibre optique (LWL) est présente entre le récepteur de lumière (LE3) et l'émetteur de lumière (LS3).

4. Dispositif de commutation selon l'une des revendications précédentes, **caractérisé par le fait que** les crochets à déclic (12) sont adaptés aux dimensions d'un rail de support (80) de manière à ce qu'un module (M1, M2) puisse être monté directement sur un rail de support (80).

5. Dispositif de commutation selon l'une des revendications précédentes, **caractérisé par le fait que** les boîtiers de chaque module (M1 M2) ont une forme extérieure identique.

6. Dispositif de commutation selon l'une des revendications précédentes, **caractérisé par le fait qu'**un module (M1, M2) est formé de deux moitiés de boîtier identiques dont le plan de séparation est situé dans le plan de l'étendue la plus grande d'un module.

7. Dispositif de commutation selon l'une des revendications précédentes, **caractérisé par le fait qu'**un module de précommutation (VM) ayant la même construction de boîtier qu'un module émetteur (M1) et étant pourvu des mêmes moyens d'accouplement mécanique (12, 14) que le module émetteur (M1) est associé au module émetteur (M1), et le module de précommutation (VM) comprend un circuit qui abaisse une tension d'alimentation applicable au niveau de la tension de service de l'émetteur de lumière du module émetteur.

8. Dispositif de commutation selon l'une des revendications précédentes, **caractérisé par le fait qu'**un adaptateur (AT) pourvu de moyens d'accouplement mécanique (12, 14) pour le module émetteur (M1) est associé au module émetteur (M1) et l'adaptateur est pourvu de moyens pour s'encliqueter sur un rail de support (80).
